# EUROPEAN PATENT APPLICATION

(11) **EP 3 742 089 A1**
(43) Date of publication of application: **25.11.2020**
(21) Application number: 18901688.4
(22) Date of filing: 06.12.2018
(51) Int. Cl.: F25D 11/00, B60K 5/00, B60P 3/20, F25B 49/02, F25D 19/00

(54) **REFRIGERATION DEVICE**

(30) Priority: 18.01.2018 JP 2018006557
(71) Applicant: DENSO CORPORATION, Kariya-city, Aichi 448-8661 (JP)
(72) Inventor: TAKIZAWA Ryo, Kariya-city, Aichi 448-8661 (JP); UMEO Tadashi, Kariya-city, Aichi 448-8661 (JP)
(74) Representative: TBK
(86) International application number: PCT/JP2018/044945
(87) International publication number: WO 2019/142532

(57) **Abstract**

A refrigeration device disposed in a refrigerated container for transportation includes: an engine (34); a generator (38) driven by the engine; an inverter (40) configured to convert an electric power generated by the generator; an electric compressor (14) driven by the electric power converted by the inverter (40), the electric compressor constituting a part of a vapor compression refrigeration cycle; and a support member (30) that supports the engine, the generator, the inverter, and the electric compressor. The engine, the generator, and the electric compressor are located lower than a middle part of the support member in a vertical direction. The inverter is located lower than the generator in the vertical direction.

## Description

### CROSS REFERENCE TO RELATED APPLICATION

This application is based on Japanese Patent Application No. 2018-6557 filed on January 18, 2018, the disclosure of which is incorporated herein by reference.

### TECHNICAL FIELD

The present disclosure relates to a refrigeration device disposed in a refrigerated container for transportation.

### BACKGROUND ART

Patent Literature 1 discloses a conventional refrigeration device for a trailer. The refrigeration device includes a generator, an engine for driving the generator, an inverter that converts an electric power output from the generator and outputs the electric power, and an electric compressor driven by the electric power output from the inverter. The generator, the engine, the inverter, and the electric compressor are unitized in the refrigeration device. The generator and the engine are located in a lower side of the unit. The electric compressor is located above the generator. The inverter is located on a side of the generator.

### PRIOR ART DOCUMENT

### PATENT DOCUMENT

Patent Document 1: JP 2011-7480 A

### SUMMARY OF THE INVENTION

The electric compressor is heavy. Therefore, it may be preferable that the electric compressor is arranged in the lower side of the unit. This is because it is possible, by positioning the electric compressor in the lower side of the unit, to reduce the burden of lifting the electric compressor at the time of manufacturing the refrigeration device or performing maintenance. Accordingly, in order to arrange the electric compressor at a lower position, it may be conceivable to switch the positions of the electric compressor and the inverter in the general refrigeration device. Accordingly, the electric compressor can be arranged in the lower side of the unit.

However, in this case, the inverter is located higher than the generator. Accordingly, the heat generated by the generator may be transferred to the inverter by the natural convection of the air around the generator.

It is an object of the present disclosure to provide a refrigeration device in which an electric compressor can be arranged in a lower side of a unit and heat generated from the electric compressor can be suppressed from being transferred to an inverter.

In order to achieve the above object, according to an aspect of the present disclosure, a refrigeration device disposed in a refrigerated container for transportation includes: an engine; a generator driven by the engine; an inverter configured to convert electric power generated by the generator; an electric compressor driven by the electric power converted by the inverter, the electric compressor constituting a part of a vapor compression refrigeration cycle; and a support member that supports the engine, the generator, the inverter, and the electric compressor. The engine, the generator, and the electric compressor are located lower than a middle part of the support member in a vertical direction, and the inverter is located lower than the generator in the vertical direction.

The inverter is located lower than the generator in the vertical direction. Accordingly, a space for the electric compressor can be secured in a part of the support member lower than the middle part in the vertical direction. Therefore, the electric compressor can be disposed in a lower side of the unit.

Further, the heat generated from the generator is transferred upward by the natural convection of the air around the generator. Accordingly, the heat transfer from the generator to the inverter can be suppressed.

The reference numerals in parentheses attached to the components and the like indicate an example of correspondence between the components and the like and specific components and the like described in an embodiment to be described below.

### BRIEF DESCRIPTION OF THE DRAWINGS

FIG. 1 is a diagram illustrating a refrigeration device and a refrigerated container according to a first embodiment.
FIG. 2 is a diagram illustrating a refrigerator circuit of the refrigeration device according to the first embodiment.
FIG. 3 is a front view showing the refrigeration device according to the first embodiment.
FIG. 4 is a cross-section of the refrigeration device taken in a vertical direction, according to the first embodiment.
FIG. 5 is a cross-sectional view of a duct shown in FIG. 3.

### EMBODIMENTS FOR EXPLOITATION OF THE INVENTION

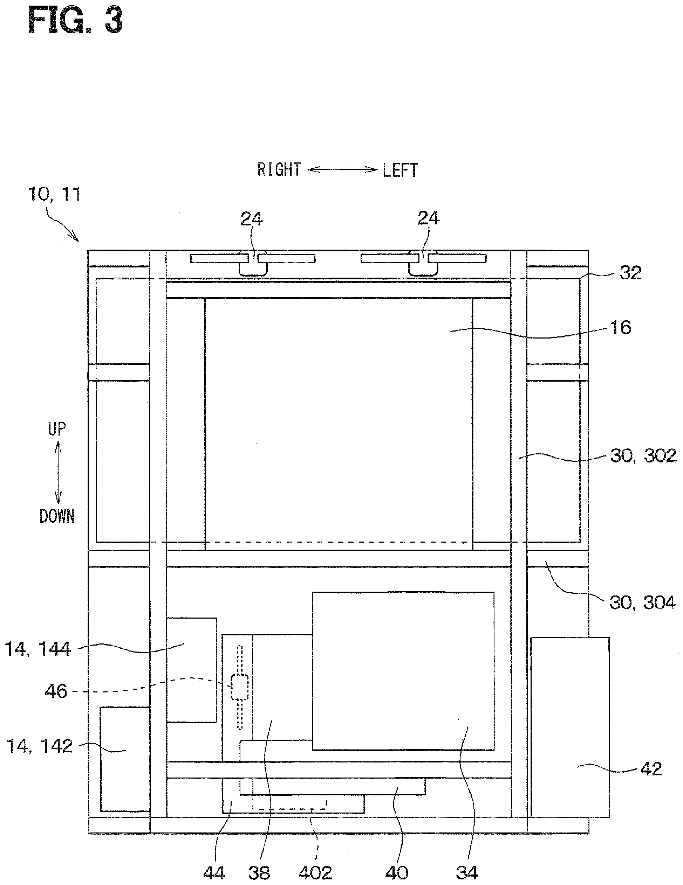

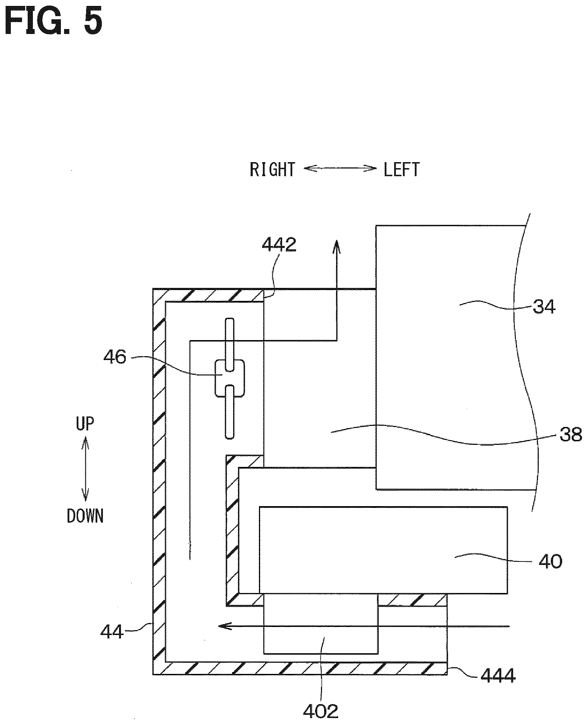

Hereinafter, embodiments of the present disclosure will be described with reference to the drawings. The directions indicated by arrows in FIGS. 3, 4, 5 represent the direction when a refrigeration device 10 is installed on a trailer 1.

### (First embodiment)

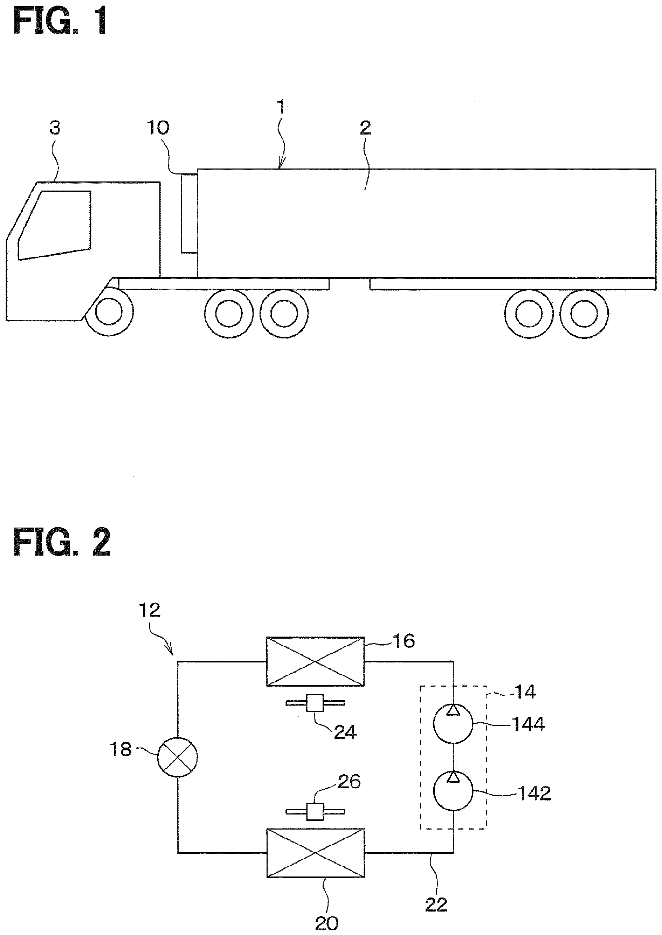

As shown in FIG. 1, the refrigeration device 10 of the present embodiment is disposed in a refrigerated container 2 of the trailer 1. The trailer 1 is a vehicle for transportation of the refrigerated container towed by a tractor 3 The refrigerated container 2 is a refrigerated container for transportation transported by a vehicle. The refrigerated container 2 is a container that keeps internal air at a lower temperature than external air.

As shown in FIG. 2, the refrigeration device 10 includes a refrigerator circuit 12 constituting a vapor compression refrigeration cycle. An electric compressor 14, a refrigerant radiator 16, an expansion valve 18, and an evaporator 20 are disposed in the refrigerant circuit 12. The electric compressor 14, the refrigerant radiator 16, the expansion valve 18, and the evaporator 20 are connected with each other through pipes 22.

The electric compressor 14 constitutes a part of the vapor compression refrigeration cycle. The electric compressor 14 compresses and discharges the refrigerant drawn therein. The electric compressor 14 includes a first compressor 142 and a second compressor 144. The first compressor 142 compresses and discharges the refrigerant drawn therein. The second compressor 144 draws the refrigerant discharged from the first compressor 142, and discharges the refrigerant after compressing. The electric compressor 14 is driven by an alternating current converted by the inverter 40 described later.

The refrigerant radiator 16 causes the refrigerant discharged by the electric compressor 14 to release heat. The refrigerant radiator 16 is an heat exchanger for exchanging heat between the refrigerant and an air outside the refrigerated container 2. The expansion valve 18 is a decompressor that decompresses and expands the refrigerant flowing out of the refrigerant radiator 16. The evaporator 20 causes the refrigerant flowing out of the expansion valve 18 to evaporate. The evaporator 20 is an heat exchanger for exchanging heat between the refrigerant and the air inside the refrigerated container 2. Although not shown, the refrigeration device 10 includes an injection passage, an intermediate pressure expansion valve, and an internal heat exchanger. The injection passage causes a part of the refrigerant flowing out of the refrigerant radiator 16 to flow into a part between the first compressor 142 and the second compressor 144. The intermediate pressure expansion valve decompresses and expands the refrigerant flowing through the injection passage such that the refrigerant becomes an intermediate-pressure refrigerant. The intermediate-pressure refrigerant is a refrigerant having a pressure between a low-pressure refrigerant drawn by the electric compressor 14 and a high-pressure refrigerant discharged by the electric compressor 14. The internal heat exchanger exchanges heat between the high-pressure refrigerant flowing from the refrigerant radiator 16 toward the expansion valve 18 and the intermediate-pressure refrigerant in the injection passage flowing from the intermediate pressure expansion valve toward the electric compressor 14.

The refrigeration device 10 includes a radiator fan 24 and an evaporator fan 26. The radiator fan 24 is configured to convey the air outside the refrigerated container 2 to the refrigerant radiator 16. The evaporator fan 26 is configured to convey the air inside the refrigerated container 2 to the evaporator 20.

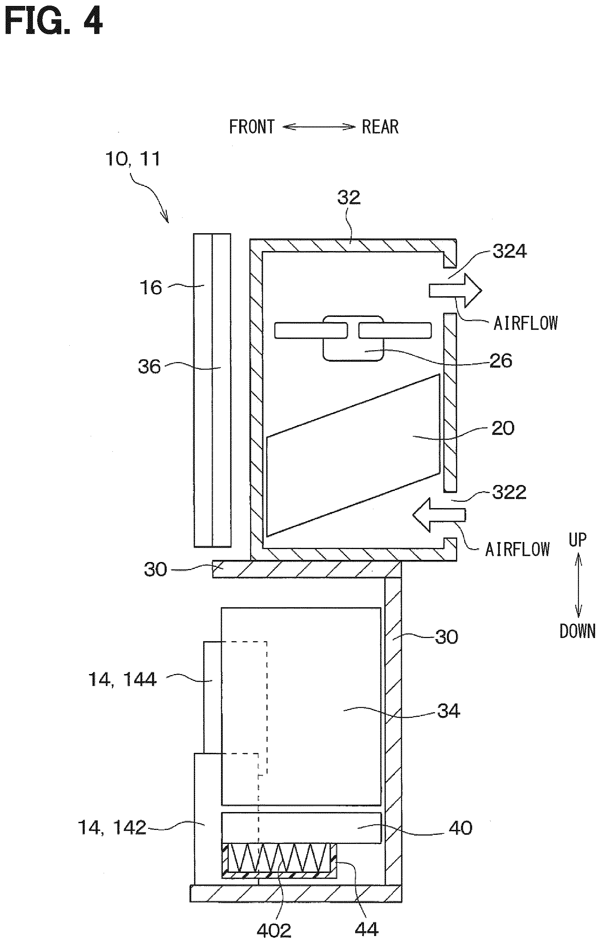

As shown in FIGS. 3, 4, the refrigeration device 10 includes a frame 30. The frame 30 is a support member that supports components of the refrigeration device 10. The frame 30 forms a framework of the refrigeration device 10. The components are fixed to the frame 30. The components are unitized to be the unit 11. The frame 30 includes a vertical member 302 extending in a vertical direction and a lateral member 304 extending in a horizontal direction.

As shown in FIG. 3, the refrigerant radiator 16 and the radiator fan 24 are located in an upper side the unit 11. The upper side of the unit 11 is a position above a middle part of the frame 30 in an up-down direction (e.g. vertical direction). The radiator fan 24 is located higher than the refrigerant radiator 16.

As shown in FIG. 4, the evaporator 20 and the evaporator fan 26 are located in the upper side of the unit 11. The refrigeration device 10 includes an air flow path member 32. The air flow path member 32 forms an air flow path for the air inside the refrigerated container 2. The air flow path member 32 is located in the upper side of the unit. The air flow path member 32 is aligned with the refrigerant radiator 16 in a front-rear direction of the vehicle. The evaporator 20 and the evaporator fan 26 are disposed in the air flow path member 32. The evaporator 20 and the evaporator fan 26 are fixed to the frame 30 through the air flow path member 32. The evaporator 20 and the evaporator fan 26 may be directly fixed to the frame 30 not to the air flow path member 32. The air flow path member 32 has an air inlet 322 and an air outlet 324. The air inside the refrigerated container 2 flows into the air flow path member 32 from the air inlet 322. The air that has passed through the evaporator 20 flows into the refrigerated container 2 from the air outlet 324.

As shown in FIGS. 3, 4, the refrigeration device 10 includes an engine 34, a radiator 36, a generator 38, and the inverter 40.

The engine 34 drives the generator 38. The engine 34 is an engine dedicated to driving the generator 38. The engine 34 is an internal combustion engine for generating power. The radiator 36 is a coolant radiator configured to release heat of the coolant of the engine 34 to the air outside the refrigerated container 2.

The generator 38 is driven by the engine 34. The generator 38 generates electric power. The inverter 40 is configured to convert the electric power generated by the generator 38 into the alternating electric power that has a predetermined voltage and a predetermined frequency. The inverter 40 is configured to supply the converted alternating current to the electric compressor 14 and the like. The inverter 40 includes a heat radiation fin 402. The heat radiation fin 402 is a heat radiation member that causes the inverter 40 to release heat to the air around the inverter 40. A corrugated fin is used as the heat radiation fin 402.

As shown in FIG. 3, the electric compressor 14, the engine 34, the generator 38, and the inverter 40 are located in a lower side of the unit 11. The lower side of the unit 11 is a position below the middle part of the frame 30 in the up-down direction. The middle part of the frame 30 in the up-down direction is a middle part between an upper end of the frame 30 and a lower end of the frame 30.

The generator 38 is located on a side of the engine 34. The first compressor 142 and the second compressor 144 are located on the side of the generator 38. The side means one of a left side or a right side. An upper end of the second compressor 144 is located higher than an upper end of the first compressor 142 in the up-down direction. The upper end of the second compressor 144 may be at the same position as the upper end of the first compressor 142 in the up-down direction. The upper end of the second compressor 144 may be located lower than the upper end of the first compressor 142 in the up-down direction. The inverter 40 is located lower than both the generator 38 and the engine 34.

As shown in FIG. 4, the radiator 36 is located in the upper side of the unit 11. The radiator 36 is aligned with the refrigerant radiator 16 in the front-rear direction of the vehicle.

As shown in FIG. 3, the refrigeration device 10 includes a controller 42. The controller 42 controls the engine 34, the electric compressor 14, the radiator fan 24, and the evaporator fan 26. The controller 42 is located in the lower side of the unit 11. The controller 42 is located on the other side of the engine 34 opposite from the generator 38.

As shown in FIGS. 3, 4, 5, the refrigeration device 10 includes a duct 44 and a generator fan 46.

The duct 44 forms therein an air flow path. The duct 44 guides the air outside the refrigerated container 2 to the generator 38 via a surface of the heat radiation fin 402. One end 442 of the duct 44 is joined to the generator 38. The other end 444 of the duct 44 is located below the inverter 40.

A part of the heat radiation fin 402 is located in the duct 44. Specifically, the heat radiation fin 402 penetrates the duct 44. The heat radiation fin 402 extends from the inverter 40 to the inside of the duct 44.

The generator fan 46 is a fan configured to cause the air in the duct 44 to flow toward the generator 38. The generator fan 46 is located in a part of the duct 44 close to the generator 38.

Accordingly, the duct 44 extends from the generator 38 to the heat radiation fin 402. The generator fan 46 and the heat radiation fin 402 are connected through the duct 44.

Next, the operation of the refrigeration device 10 of the present embodiment will be described.

### <Cooling of the refrigerated container 2>

When an operation switch (not shown) is turned on, the refrigeration device 10 is put into operation. When the refrigeration device 10 is in operation, the controller 42 actuates the engine 34. The actuation of the engine 34 causes the generator 38 to generate electric power. The electric power is converted by the inverter 40 into the predetermined alternating electric power. The converted electric power is supplied to the electric compressor 14, the radiator fan 24, and the evaporator fan 26 shown in FIG. 2. As a result, the electric compressor 14, the radiator fan 24, and the evaporator fan 26 are actuated. That is, the vapor compression refrigeration cycle is actuated.

Specifically, the refrigerant is compressed by the electric compressor 14. The compressed refrigerant flows into the refrigerant radiator 16. The refrigerant releases heat at the refrigerant radiator 16 by exchanging heat with the air outside the refrigerated container. The refrigerant that has released heat is decompressed and expanded at the expansion valve 18. The refrigerant flowing out of the expansion valve 18 flows into the evaporator 20. The refrigerant evaporates in the evaporator 20 due to the heat exchange with the air inside the refrigerated container. The evaporated refrigerant is drawn into the electric compressor 14.

At this time, as shown in FIG. 4, the evaporator fan 26 causes the air inside the refrigerated container 2 to flow into the air flow path member 32 from the air inlet 322. The air flowing into the air flow path member 32 passes through the evaporator 20. The air is cooled by exchanging heat with the refrigerant. The cooled air flows into the refrigerated container 2 from the air outlet 324. The inside of the refrigerated container 2 is cooled by the cooled air. In this way, freezing and refrigeration of the inside of the refrigerated container 2 are performed.

### <Cooling of the inverter 40>

The generator fan 46 is attached to a rotor (not shown) of the generator 38. As the rotor of the generator 38 rotates, the generator fan 46 rotates. Accordingly, the generator fan 46 is actuated along with the generator 38 when the refrigeration device 10 is in operation. As the generator fan 46 is operated, the air outside the refrigerated container 2 flows through the duct 44 from the other end 444 of the duct 44 toward generator 38.

At this time, the air outside the refrigerated container 2 flows along the surface of the heat radiation fin 402. Accordingly, the heat of the inverter 40 is released from the heat radiation fin 402 to the air outside the refrigerated container. That is, the inverter 40 is cooled. The air that has passed through the heat radiation fin 402 flows through the generator 38. As a result, the generator 38 is cooled.

As described above, the refrigeration device 10 of the present embodiment includes the engine 34, the generator 38, the inverter 40, the electric compressor 14, and the frame 30. The engine 34, the generator 38, and the electric compressor 14 are located lower than the middle part of the frame 30 in the up-down direction.

In general refrigeration devices, the inverter 40 is located on a side of the generator 38. In contrast, in the refrigeration device 10 of the present embodiment, the inverter 40 is located lower than the generator 38. Accordingly, the space for the electric compressor 14 can be secured in the lower side of the unit 11. Therefore, the electric compressor 14 can be disposed in the lower side of the unit 11.

In the refrigeration device 10 of the present embodiment, the electric compressor 14 is disposed in the lower side of the unit 11 as well as the engine 34 and the generator 38. Accordingly, it is possible, by positioning the electric compressor 14 in the lower side of the unit, to reduce the burden of lifting the electric compressor 14 at the time of manufacturing the refrigeration device 10 or performing maintenance.

The heat generated from the generator 38 is transferred upward by the natural convection of the air around the generator 38. Accordingly, the heat transfer from the generator 38 to the inverter 40 can be suppressed.

Further, in the refrigeration device 10 of the present embodiment, the inverter 40 includes the heat radiation fin 402. The refrigeration device 10 of the present embodiment includes the duct 44 and the generator fan 46. By driving the generator fan 46, the air outside the refrigerated container 2 is guided to the generator 38 via the surface of the heat radiation fin 402. As a result, the inverter 40 can be forcibly cooled by the air outside the refrigerated container. Accordingly, the cooling performance for cooling the inverter 40 can be improved as compared to a case where the inverter 40 is not forcibly cooled.

### (Other embodiments)

(1) In the above-described embodiment, the one end 442 of the duct 44 is joined to the generator 38. However, the one end 442 of the duct 44 may be separated from the generator 38 as long as the air can be guided to the generator 38 from the duct 44.
   Further, a part of the heat radiation fin 402 is disposed in the duct 44. However, the heat radiation fin 402 may not be disposed in the duct 44 as long as the air outside the refrigerated container 2 can be guided to the generator 38 via the surface of the heat radiation fin 402. For example, the other end 444 of the duct 44 may be located at a part close to the heat radiation fin 402.
   As described above, the positional relationship between the heat radiation fin 402 and the duct 44 is not limited to the above-described embodiment. The other positional relationships are acceptable as long as the duct 44 and the heat radiation fin 402 are arranged such that the air outside the refrigerated container flows to the generator 38 via the surface of the heat radiation fin 402.
(2) In the above-described embodiment, the heat radiation fin 402 is used as a heat radiation member of the inverter 40. However, a member having a different shape than a fin may be used as the heat radiation member of the inverter 40.
(3) In the above-described embodiment, the refrigeration device 10 includes the duct 44. However, the refrigeration device 10 may not include the duct 44. Even in this case, the heat transfer from the generator 38 to the inverter 40 can be suppressed by arranging the inverter 40 at a position lower than the generator 38 in the up-down direction.
(4) In the above-described embodiment, the electric compressor 14 is located on a side of the generator 38 in the left-right direction of the vehicle. However, the electric compressor 14 may be located on a side of the generator in the front-rear direction of the vehicle. That is, other positional relationships are acceptable as long as the electric compressor 14 is aligned with the generator 38 in the horizontal direction. Moreover, the electric compressor 14 may not be aligned with the generator 38 in the horizontal direction as long as the electric compressor 14 is disposed in the lower side of the unit 11.
(5) In the above-described embodiment, the electric compressor 14 includes the first compressor 142 and the second compressor 144. However, the electric compressor 14 may include only one compressor.
(6) In the above-described embodiment, the refrigeration device 10 is installed in the refrigerated container for transportation transported by a vehicle. However, the refrigeration device 10 may be installed in a refrigerated container for transportation transported by a ship, a train or the like.
(7) The present disclosure is not limited to the foregoing description of the embodiments and can be modified within the scope of the present disclosure. The present disclosure may also be varied in many ways. Such variations are not to be regarded as departure from the disclosure, and all such modifications are intended to be included within the scope of the disclosure. The above embodiments are not independent of each other, and can be appropriately combined together except when the combination is obviously impossible. Further, in each of the above-mentioned embodiments, it goes without saying that components of the embodiment are not necessarily essential except for a case in which the components are particularly clearly specified as essential components, a case in which the components are clearly considered in principle as essential components, and the like. A quantity, a value, an amount, a range, or the like, if specified in the above-described example embodiments, is not necessarily limited to the specific value, amount, range, or the like unless it is specifically stated that the value, amount, range, or the like is necessarily the specific value, amount, range, or the like, or unless the value, amount, range, or the like is obviously necessary to be the specific value, amount, range, or the like in principle. Further, in each of the embodiments described above, when materials, shapes, positional relationships, and the like, of the components and the like, are mentioned, they are not limited to these materials, shapes, positional relationships, and the like, unless otherwise specified and unless limited to specific materials, shapes, positional relationships, and the like.

### (Overview)

According to a first aspect described in a part or all of the embodiments, the refrigeration device disposed in the refrigerated container for transportation includes the engine, the generator, the inverter, the electric compressor, and the support member. The support member supports the engine, the generator, the inverter, and the electric compressor. The engine, the generator, and the electric compressor are located lower than a middle part of the support member in a vertical direction. The inverter is located lower than the generator in the vertical direction.

According to a second aspect, the inverter has a heat radiation member configured to release heat of the inverter to the air around the inverter. The refrigeration device includes: a duct that guides the air outside the refrigerated container for transportation to the generator via a surface of the heat radiation member; and a fan configured to cause the air in the duct to flow from the heat radiation member to the generator.

As a result, the inverter can be forcibly cooled by the air outside the refrigerated container. Accordingly, the cooling performance for cooling the inverter can be improved as compared to a case where the inverter is not forcibly cooled.

According to a third aspect, a part of the heat radiation member is located in the duct. The configuration of the third aspect can be used as a specific structure in the second aspect.

According to a fourth aspect, the electric compressor is aligned with the generator in a horizontal direction. The configuration of the fourth aspect can be used as a specific structure in the first to third aspects.

## Claims

1. A refrigeration device disposed in a refrigerated container (2) for transportation, the refrigeration device comprising:
an engine (34);
a generator (38) driven by the engine;
an inverter (40) configured to convert electric power generated by the generator;
an electric compressor (14) driven by the electric power converted by the inverter (40), the electric compressor constituting a part of a vapor compression refrigeration cycle; and
a support member (30) that supports the engine, the generator, the inverter, and the electric compressor, wherein
the engine, the generator, and the electric compressor are located lower than a middle part of the support member in a vertical direction, and
the inverter is located lower than the generator in the vertical direction.

2. The refrigeration device according to claim 1, wherein
the inverter has a heat radiation member (402) configured to release heat of the inverter to an air around the inverter,
the refrigeration device further comprises:
a duct (44) that guides the air outside the refrigerated container for transportation to the generator via a surface of the heat radiation member; and
a fan (46) configured to cause the air in the duct to flow from the heat radiation member to the generator.

3. The refrigeration device according to claim 2, wherein
a part of the heat radiation member is located in the duct.

4. The refrigeration device according to any one of claims 1 to 3, wherein
the electric compressor is aligned with the generator in a horizontal direction.
